Europäisches Patentamt

European Patent Office

Office européen des brevets

(19)

(11) Publication number: **0 144 151**
**A1**

## EUROPEAN PATENT APPLICATION

(21) Application number: **84307483.2**

(22) Date of filing: **30.10.84**

(51) Int. Cl.⁴: **C 09 D 9/00**

(30) Priority: **01.11.83 GB 8329171**

(43) Date of publication of application:
**12.06.85 Bulletin 85/24**

(84) Designated Contracting States:
**AT BE CH DE FR IT LI LU NL SE**

(71) Applicant: **STERWIN AG.**
**Zeughausgasse 9**
**CH-6300 Zug(CH)**

(72) Inventor: **Brocklehurst, Peter**
**87 Cowley Lane**
**Chapeltown Sheffield S30 4ZT(GB)**

(72) Inventor: **Taylor, Philip George**
**73 Gleadless Avenue**
**Gleadless Sheffield S12 2QG(GB)**

(74) Representative: **Green, Alan James et al,**
**Sanderson & Co. 97 High Street**
**Colchester Essex C01 1TH(GB)**

(54) **Organic solvent stripper composition.**

(57) The present invention relates to an organic solvent stripper composition, in particular a paint or varnish stripper.

The stripper composition of the invention comprises methylene chloride or a like organic solvent in an amount sufficient to provide the desired degree of stripping action. The methylene chloride or like solvent is present in an aqueous emulsion which contains a film-forming polymer comprising a natural or synthetic rubber insoluble or essentially insoluble in the methylene chloride or other solvent. The rubber is present in an amount sufficient to form a skin when the composition is applied as a layer over a coated surface to be stripped.

EP 0 144 151 A1

# ORGANIC SOLVENT STRIPPER
## COMPOSITION

The present invention relates to an organic solvent stripper composition, in particular a paint or varnish stripper composition preferably based on methylene chloride.

It has recently been proposed to incorporate a film-forming polymer in a methylene chloride paint stripper composition. In the proposed composition the polymer is dissolved in the methylene chloride to provide a stripper composition which is essentially a solution of the polymer in that organic solvent. In use, when the organic solvent evaporates, the polymer remains on the substrate carrying the paint film to be stripped as a coherent film to which the paint residue adheres. Removal of the thus-formed film facilitates removal of paint residue, and this provides the basic advantage of such peelable solvent paint stripper systems.

The disadvantage of such systems lies in the relatively large amount of polymer which must be dissolved in the methylene chloride solvent. The amount of polymer dissolved detracts from the useful solvent power of the solvent stripper, which means that the methylene chloride effectively is rendered more limited in its ability to dissolve the resins contained in the paint film to be stripped. The more the solvent power of the methylene chloride is taken up by providing solubility for the polymer necessary to form the peelable skin, the less solvent power there remains to dissolve the paint film. Thus, the usefulness of the stripping composition is reduced.

It has also been proposed to prepare methylene chloride paint stripper compositions containing a film-forming polymer in which the type or amount of polymer is such as to provide a thickening effect, but not a film-forming effect. Thus, for example, in Specification No. 485,857, a thickening effect is provided by incorporating a polymer in an amount not sufficient to form a film, together with (as a substance for forming a skin) a filling agent in the form of scales or leaves e.g. talc. In addition, Specification No. 2,031,447A describes a stripper composition comprising methylene chloride and including a film-forming polymer such as a vinyl acetate or acrylic polymer in an amount insufficient to form a film.

In both of the above instances, the stripping power of the methylene chloride is preserved by employing a secondary solvent for the film-forming polymer. Such a secondary solvent may be another organic solvent or water and, in the case of water, the solution of polymer in water is emulsified with the water-immiscible methylene chloride solvent. In that manner, as described in the latter specification, because the methylene chloride is used more effectively than in conventional paint strippers, it is possible to reduce the volume of solvent present in the stripping system e.g. from the conventional 80% down to around 45%, with a consequent reduction of the overall cost of the paint stripper.

We have now found surprisingly that by using a specific class of polymers not previously employed as skin-forming agents in peelable strippers, peelable methylene chloride strippers can be prepared in which there is no reduction in the stripping power of the methylene chloride, while at the same time there is formed during use a peelable skin having sufficient strength to remain intact for removal of paint or varnish or like residues, and no other skin-forming substances such as talc are required in the composition.

Accordingly, the present invention provides a stripper composition, which composition comprises methylene chloride in an amount sufficient to provide the desired degree of stripping action, the methylene chloride being present in an aqueous emulsion containing a film-forming polymer which is a natural or synthetic rubber insoluble or essentially insoluble in methylene chloride, and the rubber being present in an amount sufficient to form a skin when the composition is applied as a layer over a coated surface to be stripped.

The stripper composition of the invention may be used in a variety of situations where it is desired to remove a coating comprising a solvent-soluble film from a substrate surface. Accordingly, while the invention is particularly applicable to paint stripper compositions, it is to be understood that the invention also embraces other stripper compositions, including

those used for stripping varnish.

In the composition of the invention, the organic solvent generally will be methylene chloride as indicated above, although other organic solvents could be employed if desired. Thus, in a modification of the composition of the invention, the methylene chloride may be partly or wholly replaced by another organic solvent which is capable of dissolving a paint or varnish or like film, and the rubber is then chosen from those which are insoluble or essentially insoluble in the alternative solvent or solvent mixture employed. Thus, as can be seen from the specific Examples below, trichloroethylene, for example, may be used at least partly to replace methylene chloride e.g. in an amount of up to about 10% by weight or more.

Generally, the methylene chloride or other solvent will be present in the composition in an amount typically in excess of about 45% by weight, with the upper limit typically being about 85% by weight. Preferably, the amount of methylene chloride is from about 50% to about 80% by weight, more preferably from about 60% to about 70% by weight. It will be understood, however, that the amount of methylene chloride can be varied within a wide range depending on the degree of solvent power required.

The composition of the invention generally contains a film-forming polymer which is a natural or synthetic rubber, at least essentially insoluble in methylene chloride, or other solvent employed. Furthermore, since such materials are conveniently obtained as aqueous latices, and since water is essential to provide the aqueous emulsified form in which the composition of the invention is presented at least some, and preferably essentially all, of the water present in the composition can be provided as part of a rubber latex.

The amount of water present in the composition must be sufficient to act as a carrier for the rubber and to form a relatively stable emulsion. Generally, from about 5 to about 20% by weight of water will be present based on the composition, and preferably from about 5 to about 10% by weight of the composition.

The amount of rubber present in the composition of the invention should be such as to provide an essentially peelable skin on use, and typically will be at least about 5% by weight of the composition. While the upper limit on the amount of rubber present is not critical, for economic reasons it is not likely to exceed about 20% by weight. Preferably, the amount of rubber will be in the range of from about 5 to about 15% by weight of the total composition, e.g. from about 6 to about 10% by weight. Thus, in the case where a rubber latex containing say about 50% to about 60% by weight of solids is employed, the amount of rubber latex in the composition typically will be from about 10 to about 30% by weight e.g. about 10 to about 20% by weight, of latex.

In the composition of the invention, the rubber should be one which affords on drying an elastic and relatively tough film, and may be selected from the many natural or synthetic rubbers now available. Where the rubber is a synthetic rubber is may be a neoprene, butadiene-styrene, acrylonitrile-butadiene, ethylene-propylene-diene, polyisoprene, styrene-isoprene, isobutylene-isoprene, polyacrylonitrile, silicone, epichlorohydrin, or polyurethane rubber. Preferably however, the rubber is a natural rubber, typically a prevulcanised rubber, and more preferably a natural rubber latex having one or more of the following properties:

i. A pH of from about 10 to about 11, e.g. 10.5 $\pm$ 0.3,

ii. A total solids content of from about 50 to about 70% by weight e.g. about 60% by weight, iii. An alkalinity of from about 150 to about 400 meq, e.g. 350 $\pm$ 50 meq, and/or

iv. A viscosity lying in the range of from about 25 to about 65 seconds as measured by the Ford Cup No. 3 method at 30°C, e.g. 25 to 45 seconds, or 30 to 65 seconds.

The composition of the invention may also include other standard ingredients employed in paint stripping compositions. As examples of such standard ingredients there may be mentioned wetting agents, dyes and other colouring agents e.g. stainers, preservatives and organic solvents in addition to methylene chloride or its equivalent film-dissolving solvent on which the composition is based. All such additional ingredients must, of course, be compatible with the other essential ingredients of the composition and, in particular, must be compatible with the desired emulsified form of the composition. Otherwise, the selection of these conventional ingredients and suitable concentrations for them is believed to be within the competence of the man skilled in the art.

Especially, however, the composition of the invention may also include a water-miscible organic solvent, in particular an alcohol such as methanol, ethanol or isopropyl alcohol, preferably the later. Also, it is preferred that the composition should include an emulsifying agent, which may be nonionic, cationic or anionic, and if desired one or more dyes or stainers.

Further, the composition may include one or more hydrocarbon ingredients, in particular a liquid aromatic hydrocarbon, for example, toluene and/or xylene, and one or more solid, waxy hydrocarbons, for example, as builders.

In addition, the composition may include one or more gelling or thickening agents of the kind well known to those skilled in the art, for example, hydroxypropyl and/or methyl cellulose. The amount of such gelling and thickening agents, however, generally will not exceed about 5% by weight of the total composition, and preferably will be below about 1% by weight of the composition. It is to be understood also that the amount of any such gelling or thickening agent should not be sufficient in any way significantly to contribute to the skin-forming properties of the overall composition.

In use, the composition of the invention is applied to the surface of a coated e.g. painted or varnished, substrate. Typically, such application may be by means of a brush and typically also a plurality of separately-applied layers of composition may be employed. After any final application, the composition is then left for a period of time to enable a skin to form and the underlying paint or varnish to be softened. Typically, this will take a period of from about 1 to about 2 hours, although longer periods of contact may be desirable when a large number of coats of paint or varnish must be removed. The peelable skin is then removed using a scraper, palette knife or similar tool, although actual scraping of the underlying surface should not be necessary. The skin is lifted away from the surface together with the softened paint or varnish, and any remaining paint or varnish can then either be removed as dry flakes or by gentle scraping.

The following specific Examples illustrate compositions in accordance with the invention and their use.

### Example 1

A composition was prepared from the following ingredients:

| Ingredient | % w/w |
|---|---|
| Methylene Chloride | 63.16 |
| Isopropyl Alcohol IPS I | 10.53 |
| Perlankrol PA concentrate (An alkyl phenol ether sulphate anionic emulsifier) | 0.70 |
| High aromatic content hydrocarbon (Ronseal Brush Cleaner - a 70% aromatic mixture including toluene and xylene having a boiling point of from 160°C to 180°C) | 7.02 |
| Paraffin Wax - Arco Wax AW 2147G - a saturated hydrocarbon wax Grade 12 | 1.40 |
| Klucel G (hydroxypropyl cellulose thickener) | 0.70 |
| MR Revultex - a prevulcanised natural rubber latex obtained from Revertex Ltd. having a total solids content of 60 to 61% by weight, a pH of 10.5 $\pm$ 0.3, an alkalinity of 350 $\pm$ 50 meq and a viscosity of 25 to 45 seconds measured with a Ford Cup No. 3 at 30°C | 16.49 |
| | 100.00 |

Two boards were prepared which had ten coats of commercially-available emulsion paint and oil-based paint respectively. After allowing the panels to age for several months, two coats of the above composition were applied and a thick layer built up over the paint. After a short period a flexible rubber-like skin began to form, and after two hours all ten coats of paint from both panels could be removed with the aid of a palette knife. A peelable skin formed which had sufficient strength to remain intact on final removal. Much of the paint adhered to the film, but the remainder could easily be removed as dry flakes by gentle scraping.

Similar results were obtained with other prevulcanised natural rubbers having the following specifications:

| Rubber | Total solids by weight | pH ± 0.3 | Alkalinity meq ± 50 | Viscosity, seconds, Ford Cup No. 3 @ 30°C |
|---|---|---|---|---|
| LA Revultex | 60 to 61 | 10.0 | 180 | 25 to 45 |
| LR Revultex | 60 to 61 | 10.5 | 350 | 25 to 35 |
| HR Revultex | 60 to 61 | 10.5 | 350 | 30 to 65 |

## Example 2

A composition was prepared from the following ingredients:

| Ingredient | % w/w |
|---|---|
| Methylene chloride | 63.09 |
| Trichloroethylene | 7.50 |
| Perlankrol PA concentrate | 0.70 |
| Isopropyl alcohol IPS I | 10.00 |
| Ronseal Brush Cleaner | 5.00 |
| Paraffin Wax - Grade 12 | 1.00 |
| Klucel H | 0.70 |
| M.R. Revultex | 12.00 |
| Universal Stainer Blue | 0.005 |
| Universal Stainer Green | 0.005 |
| | 100.00 |

The composition performed as a paint stripper in the same manner as that of Example 1.

## Example 3

A composition was prepared from the following ingredients:

| Ingredient | %w/w |
|---|---|
| Methylene chloride | 65.30 |
| Trichloroethylene | 7.50 |
| Perlankrol PA concentrate | 0.70 |
| Isopropyl alcohol IPS I | 10.00 |
| Ronseal Brush Cleaner | 5.00 |
| Paraffin Wax - Grade 12 | 1.00 |
| Klucel H | 0.50 |
| M.R. Revultex | 10.00 |
| | 100.00 |

The composition performed as a varnish stripper in the same manner as the paint stripper of Example 1.

## CLAIMS

1. A stripper composition, which composition comprises methylene chloride in an amount sufficient to provide the desired degree of stripping action, the methylene chloride being present in an aqueous emulsion containing a film-forming polymer which is a natural or synthetic rubber insoluble or essentially insoluble in methylene chloride, and the rubber being present in an amount sufficient to form a skin when the composition is applied as a layer over a coated surface to be stripped.

2. A composition according to claim 1, wherein the methylene chloride is present in an amount of from about 45% to about 85% by weight, preferably from about 50% to about 80% by weight, and more preferably from about 60% to about 70% by weight, based on the composition.

3. A composition according to claim 1 or claim 2, wherein at least some of the water present in the composition is included as part of a rubber latex.

4. A composition according to any one of the preceding claims, wherein the amount of water present is from about 5% to about 20% by weight, preferably from about 5% to about 10% by weight, of the composition.

5. A composition according to any one of the preceding claims, wherein the amount of rubber present in the composition is from about 5% to about 20% by weight of the composition, the amount of rubber preferably being from about 5% to about 15% by weight e.g. about 6 to about 10% by weight.

6. A composition according to any one of the preceding claims, wherein the rubber is a synthetic rubber which is a neoprene, butadiene-styrene, acrylonitrile-butadiene, ethylene-propylene-diene, polyisoprene, styrene-isoprene, isobutylene-isoprene, polyacrylonitrile, silicone, epichlorohydrin or polyurethane rubber.

7. A composition according to any one of claims 1 to 5, wherein the rubber is a prevulcanised natural rubber, preferably a natural rubber latex having one or more of the following properties:

    i. A pH of from about 10 to about 11, e.g. $10.5 \pm 0.3$,

    ii. A total solids content of from about 50 to about 70% by weight e.g. about 60% by weight, iii.   An alkalinity of from about 150 to about 400 meq, e.g. 350 $\pm$ 50 meq, and/or

iv.   A viscosity lying in the range of from about 25 to about 65 seconds as measured by the Ford Cup No. 3 method at 30°C, e.g. 25 to 45 seconds, or 30 to 65 seconds.

8.   A composition according to any one of the preceding claims, which includes one or more of:

i. A water-miscible organic solvent, preferably an alcohol such as methanol, ethanol or isopropyl alcohol;

ii. An emulsifying agent;

iii. A hydrocarbon ingredient selected from liquid aromatic hydrocarbons such as toluene and/or xylene, and solid, waxy hydrocarbons; and/or

iv. A gelling and/or thickening agent in an amount not exceeding about 5% by weight, and preferably below about 1% by weight, of the composition, such as hydroxypropyl cellulose, methyl cellulose and mixtures thereof.

9.   A modification of a stripper composition according to any one of the preceding claims, wherein the methylene chloride is partly or wholly replaced by another organic solvent which is capable of dissolving a paint or varnish film and the rubber is chosen from those which are insoluble or  essentially insoluble in the solvent or solvent mixture employed.

10.   A modified composition according to claim 9, wherein the other organic solvent is trichloroethylene and/or the other organic solvent is present in an amount of up to about 10% by weight or more.

<table>
<tr><td>European Patent Office</td><td>**EUROPEAN SEARCH REPORT**</td><td>Application number</td></tr>
</table>

EP 84 30 7483

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol.85, 1976, page 108, abstract no. 162054c & JP-A-76 73 531 (NICHIBAN CO.LTD.) 25-06-1976. * The whole abstract * | 1 | C 09 D 9/00 |
| A,D | GB-A-2 031 447 (R. HAMER) --- | 1 | |
| A | US-A-3 060 126 (R.GERARD et al.) --- | 1 | |
| A | US-A-3 950 185 (M. TOYAMA et al.) ----- | | |
| | | | TECHNICAL FIELDS SEARCHED (Int. Cl.4) |
| | | | C 09 D |

The present search report has been drawn up for all claims

| Place of search | Date of completion of the search | Examiner |
|---|---|---|
| THE HAGUE | 13-02-1985 | GIRARD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82